Europäisches Patentamt

European Patent Office

Office européen des brevets

(19)

(11) Publication number: **0 086 394**
**B1**

(12) **EUROPEAN PATENT SPECIFICATION**

(45) Date of publication of patent specification: **16.10.85**

(21) Application number: **83100918.8**

(22) Date of filing: **09.03.82**

(60) Publication number of the earlier application in accordance with Art. 76 EPC: **0 062 171**

(51) Int. Cl.⁴: **G 11 B 23/04,** G 11 B 15/66, G 11 B 23/26

(54) **Single reel tape cartridges.**

(30) Priority: **30.03.81 US 249266**

(43) Date of publication of application:
**24.08.83 Bulletin 83/34**

(45) Publication of the grant of the patent:
**16.10.85 Bulletin 85/42**

(84) Designated Contracting States:
**DE FR GB IT**

(56) References cited:
**DE-B-1 167 894**
**DE-U-1 899 166**
**GB-A-1 021 647**
**US-A-3 169 721**
**US-A-3 170 651**

(73) Proprietor: **International Business Machines Corporation**
**Old Orchard Road**
**Armonk, N.Y. 10504 (US)**

(72) Inventor: **Richard, Maurice Edmund**
**4700 N.Snyder Circle**
**Tucson Arizona 85715 (US)**
Inventor: **Rinkleib, Helfried Otto**
**9846 E. Rosewood Street**
**Tucson Arizona 85720 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Description

The invention relates to single reel cartridges for magnetic tape and, in particular, to such cartridges in which a leader block is attached to the free end of the tape.

It is desirable to prevent contamination from entering a magnetic tape cartridge since it would interfere with subsequent reading and writing of information on the magnetic tape. Contamination arises either from external sources or from internal sources, such as when the tape slides over a guiding wall. It will be recognized that the tape path from the reel to a guiding wall external of the cartridge will vary as a function of the amount of tape wound on the reel and the distance to the first guiding wall. Where the guiding wall is external to the cartridge, the height of the opening through which the tape passes in exiting the cartridge should be sufficient to prevent the tape from rubbing when the reel is either fully wound or fully unwound. The window size in the side of the cartridge to permit tape extraction is, therefore, generally determined by the width of the tape and the height necessary to prevent rubbing. It has been recognized that as the area of the window increases, the chance for external contamination entering the cartridge increases unless some type of sealing arrangement is provided. We have found that, where a leader block is attached to the free end of the tape for the purpose of threading the tape through the tape path, the leader block and cartridge can be constructed and arranged so that the leader block functions as a seal for the section of the cartridge from which the tape exits.

U.S. specification No. 3,169,721 (Laa) describes a flat, generally rectangular tape cartridge containing a single reel of magnetic tape having the free end of the tape permanently anchored to a leader fitting accessible externally of the cartridge. The cartridge comprising a reel chamber (4) bounded by two spaced generally rectangular side webs interconnected by a peripheral wall of which two adjacent side walls do not extend to the intervening corner so as to leave an access gap in the periphery walls at that corner.

In the Laa cartridge, the side webs are cut-away at that corner and, although the peripheral wall follows the general shape of the webs, one end of the wall is displaced inwardly from the edges of the webs. A short return wall together with the side webs and the other end portion of the peripheral wall, forms a passage for the leader fitting. The Laa leader fitting fits in this passage, and is constrained in position by spring means.

The Applicants have appreciated that an advantage would be obtained if the leader attached to the tape fitted snugly into a co-operating cache. It is therefore an object of the present invention to provide an improved tape cartridge of which the construction is such that the tape leader fits snugly in a cache provided in the cartridge casing.

Accordingly, the invention provides a flat, generally rectangular tape cartridge containing a single reel of magnetic tape having the free end of the tape permanently anchored to a leader block assessible externally of the cartridge, said cartridge comprising a reel chamber bounded by two spaced generally rectangular side webs interconnected by a peripheral wall comprising four side walls of which two adjacent side walls do not extend to the intervening corner so as to leave an access gap in the periphery walls at that corner, said cartridge being characterised in that the adjacent ends of the two adjacent side walls are inter-connected by two partition walls having a tape exit opening therethrough, one partition wall extending inwardly of the cartridge in a plane tangential to the reel from one of the two adjacent side walls towards but not reaching to the other of the two adjacent walls and the second partition wall extending from the free end of the first partition wall to the other of the two adjacent side walls in a plane generally at right angles to that of the said one partition wall, in that the two adjacent side walls comprise end portions projecting towards the intervening corner beyond the respective connections with the partition walls, which end portions together with the side webs from a cavity housing the leader block, in that the leader block seats closely against the two partition walls of the cavity to cover the exit opening and prevent the entry of contaminates into the cartridge and in that the leader block is a press or tight fit between the end portions so that it is resiliently retained therebetween.

A tape cartridge embodying the present invention will now be described by way of example with reference to the accompanying drawings, in which:—

Fig. 1 is a plan view of a single reel magnetic tape cartridge embodying the present invention;

Fig. 2 is a perspective view of the tape cartridge shown in Fig. 1 with a portion of the cartridge broken away to show the window well and sills;

Figs. 3a through 3c are schematic views illustrating the movement of the leader block between the home position and a position where tape is being extracted.

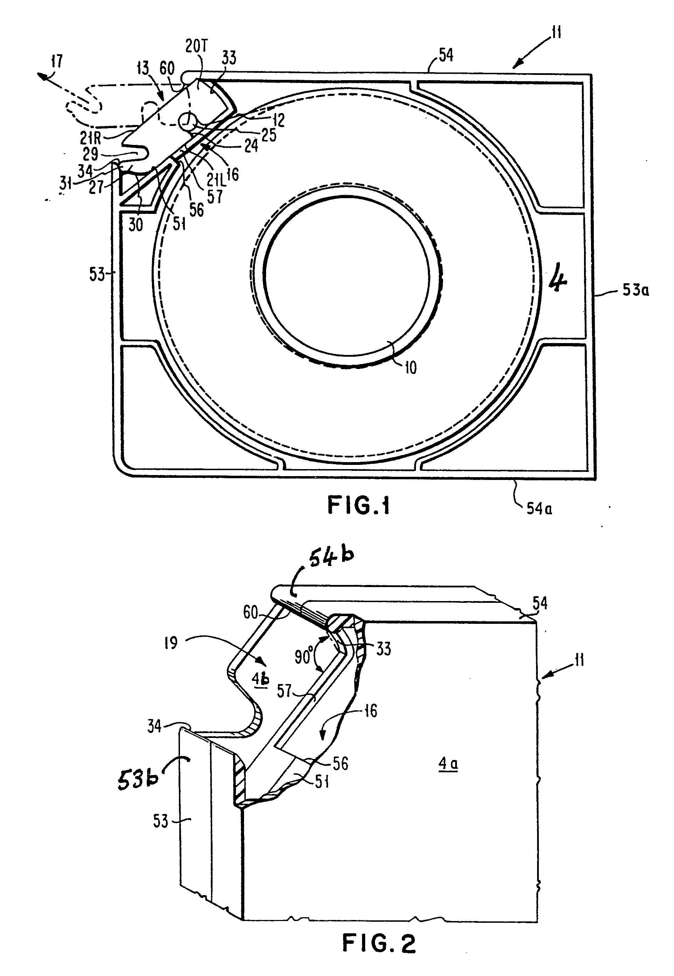

The cartridge shown in Fig. 1 is generally rectangular in shape except for one corner of the cartridge which is angled approximately 45° relative to the adjacent sides to provide a shorter fifth side in which a leader block window is constructed. As shown, the cartridge includes the reel hub 10, the casing 11, the tape 12, and the leader block 13. Tape exits from the cartridge 11 through window opening 16 when the leader block 13 is moved in the direction of arrow 17. Opening 16 is sealed off when the leader block is snapped into the leader block well or cavity 19. The casing 11 comprises a reel chamber bounded by two spaced generally rectangular side webs 4a, 4b (Fig. 2) interconnected by a peripheral wall comprising four side walls 53, 53a, 54, 54a. The two walls 53, 54 do not extend to the intervening corner so as to leave an access gap in the peripheral wall at that corner. The gap leads into a leader-block-cavity or well 19 housing a leader block 13. The cavity is formed between projecting end portions 53b, 54b of walls 53, 54, parts of the side webs 4a 4b, and two partition walls 51, 33.

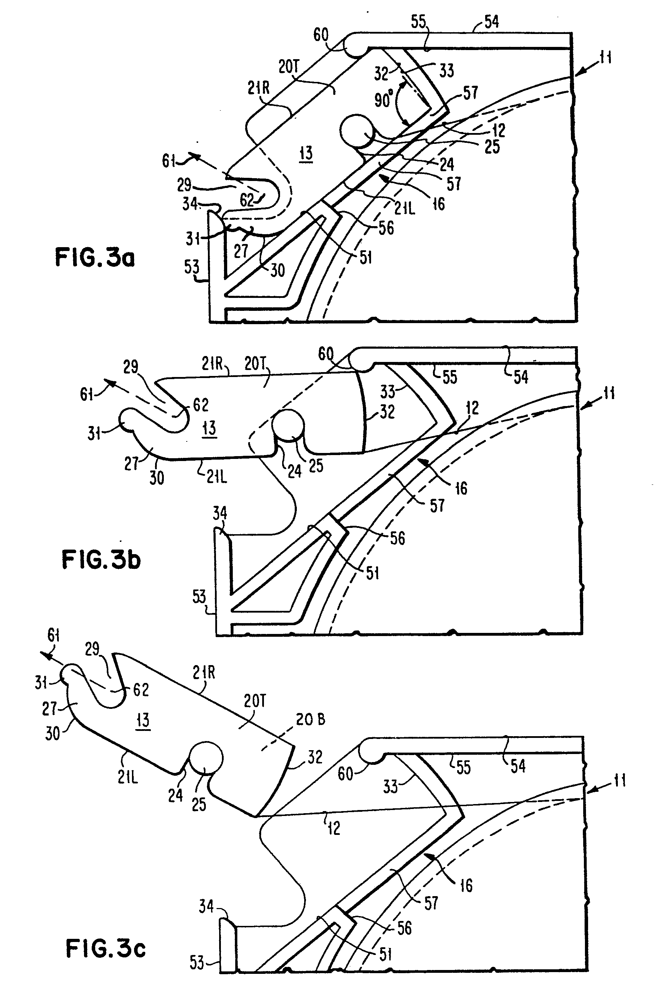

The leader block 13 can be viewed generally as a rectangular block provided with two pairs of opposite side walls and two end walls. A slot 24 extends normal to walls 20T and 20B (Fig. 3). A pin 25 is inserted into the slot which together functions to attach the tape 12 to the leader block 13. The walls 21L and 21R are generally parallel to the plane of the tape wall and the axis of the tape real. One end 27 of block 13 is also provided with means for engaging an automatic threading apparatus which may be of the type shown in copending application No. 81104238.1, published under the European publication number 42989. As shown therein, the leader block is provided with an opening into which a pick-up arm or pin on the automatic threading device is positioned. Leader block 13, as shown, is provided with a slot 29 which corresponds generally to the pin receiving slot shown in the copending application. The wall 30, as shown, is slightly cylindrical and is provided with a rounded boss or end 31 which engages an inclined end face 34 of the leader block well 19 disposed in the cartridge. The opposite, or trailing end 32 of the block 13 may also be slightly cylindrical to mate with the partition wall 33 which is similarly shaped.

The surface which defines the sills for the window for permitting exiting of the tape from the cartridge can also be seen in Fig. 2 which illustrates in perspective one corner of the cartridge in which the leader block well is disposed. As shown in Fig. 2, the window 16 is disposed in partition wall 51, which extends at an angle of approximately 45° between side 53 and side 54 of the cartridge, and in partition wall 33. The bottom of the window is defined by edge 56. As seen in Fig. 2, the left edge 57 of the window is also visible. The opposite edge is not shown. The top of the window is defined by the internal wall edge 55 since wall 33, which extends from the top wall 54 of the cartridge also at an angle of 45°, intersects wall 51. The partition walls 51 33, are disposed at an angle of approximately 90° relative to each other, as shown in Fig. 1. As previously mentioned, wall 33 is slightly rounded to cooperate with the end 32 of the leader block 13.

Figs. 3a through 3c illustrate schematically the movement of the leader block 13 from a home position in well or cavity 19 of the cartridge to a position where the leader block is pulling tape through the opening 16.

Fig. 3a illustrates the leader block snugly positioned in well 16 with the rounded boss 31 engaging surface 34 of side 53 urging the leader block towards the walls 33 and 51. This is the home position of the leader block 13. In this home position the leader block 13 is within the cartridge and the risk of accidental damage to it is greatly reduced.

Fig. 3b illustrates the position of the leader block 13 in which the block has been pivoted about the rounded surface 60 of the cartridge as a result of a pulling force acting in the direction of arrow 61 through the imaginary axis 62 in the leader block slot 29. The force may originate as previously mentioned from an automatic threading apparatus of the type described in the copending application or some other suitable prior art means which forms no part of the present invention.

Fig. 3c illustrates the position of the leader block 13 out of the well 16 and moving in a direction which unwinds tape 12 from reel 10.

During rewinding, the leader block 13 follows the same path, but in the opposite direction, as the reel is rotated in a clockwise direction, as shown in Fig. 1.

Our co-pending European Patent Application No. 82101862.9 (Publication No. 62171) contains subject-matter in common with this application and claims a magnetic tape cartridge in which a length of magnetic tape is wound on a single reel with the free end of the tape permanently connected to a generally rectangular shaped leader block, said cartridge completely surrounding said reel of magnetic tape except for an opening provided at one corner of said cartridge which permits tape wound on said reel to be unwound as said leader block is moved away from said cartridge, the corner of the cartridge through which the tape passes having a cache in which the leader block is retained when the tape is fully wound on said reel, said cartridge being characterised in that the cache is provided as a leader block receiving well including side walls which are cut-away to expose the leader block for lateral engagement by a coupling element, a bottom wall and opposed end walls attached to said bottom and side walls for engaging the leading and trailing surfaces of said leader block in a clamping relationship, said opening being provided through the bottom wall and one end wall and being effectively sealed when said leader block seats against said bottom wall and is clamped between said end walls.

**Claims**

1. A flat, generally rectangular tape cartridge containing a single reel of magnetic tape having the free end of the tape permanently anchored to a leader block accessible externally of the cartridge, said cartridge comprising a reel chamber (4) bounded by two spaced generally rectangular side webs (4a, 4b) interconnected by a peripheral wall comprising four side walls (53, 53a, 54, 54a) of which two adjacent side walls (53, 54) do not extend to the intervening corner so as to leave an access gap in the periphery walls at that corner, said cartridge being characterised in that the adjacent ends of the two adjacent side walls (53, 54) are inter-connected by two partition walls (51, 33) having a tape exit opening (16) therethrough, one partition wall (51) extending inwardly of the cartridge in a plane tangential to the reel from one of the two adjacent side walls (53) towards but not reaching to the other of the two adjacent side walls (54) and the second partition wall (33) extending from the free end of the first partition wall (51) to the other of the two adjacent side walls (54) in a plane generally at right angles to that of the said one partition wall (51), in that the two adjacent side walls (53, 54) comprise end portions (53b, 54b) projecting towards the intervening corner beyond the respective connections with the partition walls, which end portions together with the side webs (4a, 4b) form a cavity (19) housing the leader block (13), in that the leader block seats closely against the two partition walls (51, 33) of the cavity to cover the exit opening (16) and prevent the entry of contaminates into the cartridge and in that the leader block (13) is a press or tight fit between the end portions (53b, 54b) so that it is resiliently retained therebetween.

2. A cartridge as claimed in claim 1, further characterised in that the end portion (53b) of the one side wall (53) has an inclined end face (34) slidingly engaged by a surface of the leader block (13) during fitting of the block into the cavity (19) and in that the end portion (54b) of the other side wall (54) has an enlarged boss (60) at its free end which engages the leader block in the manner of a hook so that the leader block can only be removed from its cavity by initial rotation about the boss (60, Fig. 3) as a pivot to carry the other end of the leader block out of the cavity.

3. A cartridge as claimed in claim 2, further characterised in that the leader block (13) is elongate, has the free end of the tape (12) anchored to its adjacent one end and has a coupling slot (29) for engagement by the pick-up arm of a threading device adjacent its other end, in that the coupling slot (29) is formed diagonally into the external corner portion of the leader block at the said other end thereof, in that the internal corner portion at that end of the leader block is cut-away to leave a projecting finger piece for engagement against the inclined end face (34) of the cavity, and in that the end (31) of the finger piece for engagement against the inclined endface of the cavity is rounded.

4. A cartridge as claimed in claim 1, 2 or 3, further characterised in that the said one end of the leader block is curved to seat against the second partition wall (33) which is similarly curved.

5. A cartridge as claimed in claim 3 or 4, further characterised in that the side webs (4a, 4b) of the cartridge extend substantially to the said intervening corner but have parts cut away to expose the ends of the coupling slot and to allow the pick-up arm of a tape threading device to be engaged with the slot.

**Patentansprüche**

1. Flache im wesentlichen rechteckige Bandkassette, welche eine einzige Magnetbandspule mit mit einem von außerhalb der Kassette zugänglichen Führungsblock dauernd verankertem freiem Ende des Bandes enthält, wobei die Kassette eine Bandkammer (4) aufweist, welche von zwei im Abstand liegenden im wesentlichen rechteckigen Seitenflächen (4a, 4b) begrenzt ist, die durch eine Umfangswand mit vier Seitenwänden (53, 53a, 54, 54a) verbunden sind, von denen zwei benachbarte Seitenwände (53, 54) sich nicht bis zu der dazwischenliegenden Ecke erstreckten, so daß ein Zugangszwischenraum in den Umfangswänden an dieser Ecke freibleibt, dadurch gekennzeichnet, daß die benachbarten Enden der beiden benachbarten Seitenwände (53, 54) durch zwei Trennwände (51, 33), in welchen eine Bandaustrittsöffnung (16) vorgesehen ist, verbunden sind, wobei sich die eine der Trennwände (51) im Inneren der Kassette in einer zur Spule tangentialen Ebene von einer der beiden benachbarten Seitenwände (53) zur anderen der banachbarten Seitenwände (54), jedoch ohne sie zu erreichen, erstreckt, und die zweite Trennwand (33) sich vom freien Ende der ersten Trennwand (51) zur anderen der beiden benachbarten Seitenwände (54) in einer im wesentlichen zu derjenigen der einen Trennwand (51) senkrechten Ebene erstreckt, daß die beiden benachbarten Seitenwände (53, 54) Endabschnitte (53b, 54b) aufweisen, die über die jeweilige Verbindung mit den Trennwänden hinaus zu der dazwischenliegenden Ecke ragen, wobei die Endabschnitte zusammen mit den Seitenflächen (4a, 4b) einen den Führungsblock (13) aufnehmenden Hohlraum (19) ausbilden, daß der Führungsblock eng an den beiden Trennwänden (51, 33) des Hohlraums dei Austrittsöffnung (16) abdeckend und ein Eindrigen von Verunreinigungen in die Kassette verbindernd anliegt, und daß der Führungsblock (13) in Preß- oder strammen Sitz zwischen den Endabschnitten (53b, 54b) ist, so daß er elastisch zwischen diesen gehalten wird.

2. Kassette nach Anspruch 1, ferner dadurch gekennzeichnet, daß der Endabschnitt (53b) der einen Seitenwand (53) eine geneigte Endfläche (34) aufweist, welche beim Einsetzen des Führungsblocks (13) in den Hohlraum (19) von einer Fläche des Blocks gleitend erfaßt wird, und daß der Endabschnitt (54b) der anderen Seitenwand (54) einen vergrößerten Buckel (60) an seinem freien Enden aufweist, welcher den Führungsblock nach Art eines Hakens erfaßt, so daß der Führungsblock aus seinem Hohlraum nur über eine anfängliche Drehung um den Buckel (60, Fig. 3) mit diesem als Drehpunkt, das andere Ende des Führungsblocks aus dem Hohlraum befördernd entfernt werden kann.

3. Kassette nach Anspruch 2, ferner dadurch gekennzeichnet, daß der Führungsblock (13) langgestreckt ist, mit seinem zum freien Ende des Bandes (12) benachbarten Ende an diesem verankert ist und einen Kopplungsschlitz (29) für ein Erfassen durch einen Aufnehmerarm einer Fädelungsvorrichtung benachbart zu seinem anderen Ende aufweist, daß der Kopplungsschlitz (29) diagonal im äußeren Eckabschnitt des Führungsblocks am anderen Ende desselben ausgebildet ist, daß der innere Eckabschnitt an jenem Ende des Führungsblocks so abgeschnitten ist, daß ein abragendes Fingerteil für ein Angreifen an der geneigten Endfläche (34) des Hohlraums stehenbleibt, und daß das Ende (31) des Fingerteils für das Angreifen in der geneigten Endfläche des Hohlraums verrundet ist.

4. Kassette nach Anspruch 1, 2 oder 3, ferner dadurch gekennzeichnet, daß das eine Ende das Führungsblocks für ein Anliegen an die in gleicher Weise gekrümmte Trennwand (33) gekrümmt ist.

5. Kassette nach Anspruch 3 oder 4, ferner dadurch gekennzeichnet, daß die Seitenflächen (4a, 4b) der Kassette sich im wesentlichen zu der dazwischenliegenden Ecke erstrecken, aber abgeschnittene Teile aufweisen, so daß die Enden des Kopplungsschlitzes freiliegen und der Aufnehmerarm einer Bandfädelungsvorrichtung den Schlitz erfassen kann.

**Revendications**

1. Cassette de bande magnétique plate, de forme générale rectangulaire, qui contient une bobine unique de bande magnétique, dans laquelle l'extrémité libre de la bande est fixée par une liaison permanente à un bloc accessible de l'extérieur de la cassette, ladite cassette comprenant une chambre de bobine (4) délimitée par deux joues latérales espacées (4a, 4b de forme générale rectangulaire, reliées par une paroi périphérique qui comprend quatre parois latérales (53, 53a, 54, 54a) dont deux parois latérales adjacentes (53, 54) ne sont pas prolongées jusqu'à l'angle compris entre elles, de manière à laisser une fente d'accès dans les parois périphériques dans cet angle, ladite cassette étant caractérisée en ce que les extrémités adjacentes des deux parois latérales adjacentes (53, 54) sont reliées par deux cloisons (51, 53) traversées par une ouverture (16) de sortie de la bande, une cloison (51) s'étendant vers l'intérieur de la cassette dans un plan tangent à la bobine, en partant de l'une (53) des deux parois latérales adjacentes et en se dirigeant vers l'autre (54) des deux parois latérales adjacentes mais sans l'atteindre, et la deuxième cloison (33) s'étendant de l'extrémité libre de la première cloison (51) jusqu'à l'autre (54) des deux parois latérales adjacentes, dans un plan à peu près perpendiculaire à celui de ladite première cloison (51), en ce que les deux parois latérales adjacentes (53, 54) comprennent des parties d'extrémités (53b, 54b) qui font saillie vers l'angle compris entre ces parois, au-delà de leurs liaisons respectives avec les cloisons, lesdites parties d'extrémités formant, conjointement avec les joues latérales (4a, 4b), une cavité (19) qui reçoit le bloc amorce (13), en ce que le bloc amorce s'applique étroitement contre les deux cloisons (51, 53) de la cavité de manière à recouvrir l'ouverture de sortie (16) et à empêcher la pénétration des souillures dans la cassette et en ce que le bloc amorce (13) est ajusté à serage ou sans jeu entre les parties d'extrémités (53b, 54b) de manière à être retenu élastiquement entre ces parties d'extrémités.

2. Cassette selon la revendication 1, caractérisée en ce que la partie d'extrémité (53b) dela première paroi latérale (53) possède une face d'extrémité inclinée (34) qui est attaquée à glissement par une surface du bloc amorce (13) pendant l'ajustement du bloc dans la cavité (19) et en ce que la partie d'extrémité (54b) de l'autre paroi latérale (54) possède une bosse renflée (60) à son extrémité libre, bosse qui attaque le bloc amorce à la façon d'un crochet, de sorte que le bloc amorce ne peut être extrait de sa cavité que par une rotation initiale autour de la bosse (60, figure 3) de manière à pivoter pour extraire l'autre extrémité du bloc amorce de la cavité.

3. Cassette selon la revendication 2, caractérisée en ce que le bloc amorce (13) est de forme allongée, et reçoit l'extrémité libre de la bande (12) fixée à celle de ses extrémités qui est adjacente à la bande, et présente une fente d'accouplement (29) destinée à être attaquée par le bras d'entraînement d'un dispositif d'enfilement àu proximité de son autre extrémité, en ce que la fente d'accouplement (29) est formée obliquement dans la partie d'angle extérieure du bloc amorce, à ladite autre extrémité de ce bloc, en ce que la partie d'angle intérieure, à cette extrémité du bloc amorce est découpée de manière à laisser subsister une pièce formant doigt saillant destinée à s'appuyer contre la face d'extrémité inclinée (34) de la cavité, et en ce que l'extrémité (31) de la pièce formant doigt destinée à s'appuyer contre la face d'extrémité inclinée de la cavité est arrondie.

4. Cassette selon l'une des revendications 1, 2 ou 3, caractérisée en outre en ce que ladite première extrémité du bloc amorce est incurvée pour s'appliquer contre la deuxième cloison (33), qui est incurvée de la même façon.

5. Cassette selon la revendication 3 ou 4, caractérisée en ce que les joues latérales (4a, 4b) de la cassette se prolongent sensiblement jusqu'audit angle compris entre les parois mais présentent des parties échancrées de manière à laisser libres les extrémités de la fente d'accouplement et à permettre au bras d'entraînement d'un dispositif d'enfilement de la bande d'entrer en prise avec la fente.

FIG.1

FIG.2

FIG.3a

FIG.3b

FIG.3c